Europäisches Patentamt

European Patent Office

Office européen des brevets

(19)

(11) Veröffentlichungsnummer : **0 246 289**
**B1**

(12) EUROPÄISCHE PATENTSCHRIFT

(45) Veröffentlichungstag der Patentschrift :
17.05.89

(51) Int. Cl.⁴ : **G 01 G 13/00**

(21) Anmeldenummer : 86906783.5

(22) Anmeldetag : 27.11.86

(86) Internationale Anmeldenummer :
PCT/DE 86/00481

(87) Internationale Veröffentlichungsnummer :
WO/8703366 (04.06.87 Gazette 87/12)

(54) TRAGGESTELLOSE TRICHTERWAAGE FÜR EXTRUDER.

(30) Priorität : 02.12.85 DE 3542560

(43) Veröffentlichungstag der Anmeldung :
25.11.87 Patentblatt 87/48

(45) Bekanntmachung des Hinweises auf die Patenterteilung : 17.05.89 Patentblatt 89/20

(84) Benannte Vertragsstaaten :
AT BE CH FR GB IT LI LU NL SE

(56) Entgegenhaltungen :
DE--A-- 2 520 244
US--A-- 2 822 577
Plastverarbeiter, 30 vol., no. 5, 1979, (Speyer, DE),
"Verschiedene Systeme zur pneumatischen Förderung von Schüttgütern", pp. 275,276

(73) Patentinhaber : INOEX GmbH
Borgweg 27
D-4970 Bad Oeynhausen 1 (DE)

(72) Erfinder : NEUMANN, Ulrich
Im Kerksiek 10
D-4970 Bad Oeynhausen 1 (DE),

(74) Vertreter : Hentzschel, Hans-Jürgen
In der Feldmark 3
D-4970 Bad Oeynhausen 1 (DE)

## Beschreibung

Die Erfindung bezieht sich auf eine Trichterwaage zur Massedurchsatz- und Metergewichtsregelung beim Extrudieren von Kunststoffmaterialien, bestehend aus einem mit einer Entleerungklappe versehenen Wiegebehälter, einem zweiteilig ausgebildeten, im oberen Teil den Wiegebehälter mit dem Wiegestab aufnehmenden und im unteren Teil trichterförmigen geschlossenen Gehäuse, einem der Gehäusedeckplatte aufgesetzten Materialzuführungsstutzen sowie einem mit dem unteren Gehäuseteil verbundenen Auslaufschacht, in dem ein die jeweils nächste zu verwiegende Charge abrufender Niveauschalter angebracht ist.

Da Trichterwaagen der vorgenannten Art unbeeinflußt von den Antriebsvibrationen des Extruders angeordnet sein müssen, ist es bisher üblich, sie an einem getrennten Traggestell erschütterungsfrei aufzuhängen. Dieses auf dem Hallenboden stehende, als begehbare Bühne ausgebildete Gestell erfordert seinerseits aber einen beträchtlichen konstruktiven Aufwand sowie eine nicht unerhebliche Bauhöhe. Letztere ist besonders im Falle ursprünglich ohne Trichterwaage geplanter Maschinen oftmals nicht vorhanden, was daher eine Nachrüstung mit solchen in bekannter Form angebrachten Trichterwaagen unmöglich macht. Als weiterer sowohl die Anlage verteuernder als auch die Bauhöhe zusätzlich vergrößernder Nachteil kommt noch hinzu, daß zwischen den herkömmlichen Trichterwaagen und dem Extrudereinlauf stets ein flexibles Verbindungsstück vorgesehen sein muß.

Aufgabe der Erfindung ist es, eine Trichterwaage zu schaffen, die ohne ein eigenes Traggestell auskommt, so daß sich weder der damit verbundene Konstruktionsaufwand noch die ungünstige große Bauhöhe ergeben.

Zur Lösung der gestellten Aufgabe wird eine Trichterwaage mit den aus den Ansprüchen hervorgehenden Merkmalen vorgeschlagen.

Ein Ausführungsbeispiel des Anmeldungsgegenstandes wird nachfolgend an Hand der Zeichnungen erläutert. Darin zeigen im einzelnen :

Fig. 1 die schematische Seitenansicht einer erfindungsgemäßen Trichterwaage, und

Fig. 2 die zur Beschreibung gelangende Trichterwaage in der Draufsicht.

Die abgebildete Trichterwaage ist zur Massedurchsatz- und Metergewichtsregelung beim Extrudieren von Kunststoffmaterialien bestimmt. Sie ist der Extrusionsmaschine 1 mit einem Auslaufschacht 2 aufgesetzt, in dem sich ein die jeweils nächste zu verwiegende Charge abrufender Niveauschalter 3 befindet. Mit dem Auslaufschacht 2 ist über eine Flanschverbindung ein unteres trichterförmiges Gehäuseteil 4 verschraubt.

Das untere trichterförmige Gehäuseteil 4 trägt eine Gehäuseplatte 5, von der aus sich halbkreisförmig darauf angeordnete Abstandshalter 6 nach oben hin erstrecken. Diese Abstandshalter 6 sind über Schwingungsdämpfer 7 mit einer einen zentralen Materialzuführungsstutzen 8 aufnehmenden Gehäusedeckplatte 9 verbunden. An ihr hängt der mit dem Wiegestab 10 versehene ebenfalls trichterförmige Wiegebehälter 11, an dem eine vom Niveauschalter 3 gesteuerte Entleerungsklappe 12 angelenkt ist.

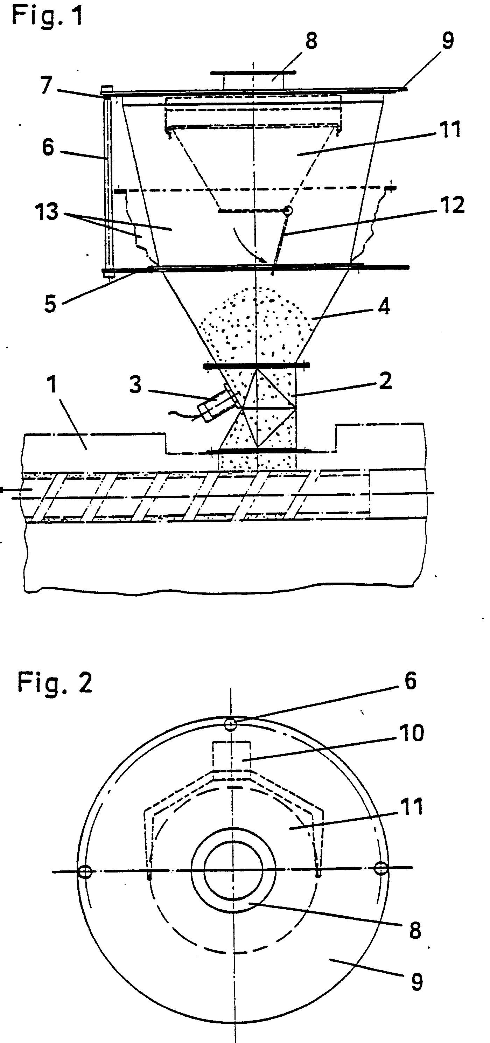

Da der Wiegevorgang wegen der auftretenden Staubentwicklung in einem geschlossenen Raum erfolgen muß, ist der Wiegebehälter 11 von einem sich zwischen der Gehäusedeckplatte 9 und der Gehäuseplatte 5 des unteren Gehäuseteils 4 erstreckenden elastischen Schlauchstück 13 umgeben. Dieses elastische Schlauchstück 13 ist aus antistatisch wirkendem Filtergewebe gefertigt und weist die Form eines sich nach unten verjüngen den Kegelstumpfes auf. Es ist an beiden Enden, d. h. also sowohl an der Gehäusedeckplatte 9 als auch an der Gehäuseplatte 5, abgedichtet befestigt, wozu seine Ränder mit leicht lösbaren Schnellverschlüssen versehen sein können. Auf diese Weise besteht die Möglichkeit, das Schlauchstück 13 jeweils zum Reinigen, Warten oder Eichen der Waage wie in Fig. 1 dargestellt auf die Gehäuseplatte 5 herabzulassen bzw. nach der zwischen den Abstandshaltern 6 geöffneten Seite herauszunehmen.

Bei der Verarbeitung von weniger staubendem Material ließe sich das Schlauchstück 13 anstelle des Filtergewebes auch ganz oder teilweise aus Klarsichtfolie herstellen, um somit ein ständiges Beobachten der Wiegevorgänge zu gestatten.

Die Vorteile der neuartigen Trichterwaage bestehen hauptsächlich im Wegfall eines aufwendigen Traggestells, so daß sich gleichzeitig eine sehr geringe Bauhöhe ergibt, aufgrund derer ihre Verwendung und Nachrüstung in fast allen vorkommenden Einsatzfällen möglich ist. Daneben zeichnet sie sich gegenüber den früheren Bauarten durch eine einfachere und insofern preiswertere Konstruktion sowie besonders gute Wartungseigenschaften aus.

## Patentansprüche

1. Trichterwaage zur Massedurchsatz- und Metergewichtsregelung beim Extrudieren von Kunststoffmaterialien, bestehend aus einem mit einer Entleerungsklappe (12) versehenen Wiegebehälter, einem zweiteilig ausgebildeten, im oberen Teil den Wiegebehälter (11) mit dem Wiegestab (10) aufnehmenden und im unteren Teil (4) trichterförmigen geschlossenen Gehäuse, einem einer Gehäusedeckplatte (9) aufgesetzten Materialzuführungsstutzen (8) sowie einem mit dem unteren Gehäuseteil (4) verbundenen Auslaufschacht (2), in dem ein die jeweils nächste zu verwiegende Charge abrufender Niveauschalter (3) angebracht ist, dadurch gekennzeichnet, daß die den Wiegebehälter (11) mit dem Wiegestab (10) tragende Gehäusedeckplatte (9) über Abstandshalter (6) und Schwingungsdämpfer (7) auf dem unteren trichterförmigen Gehäuseteil (4) abgestützt ist und daß sich zwischen der Gehäusedeckplatte (9) und dem unteren Gehäuseteil (4) ein den Wiegebehälter (11) umgebendes, an beiden Enden abgedichtet befestigtes elastisches Schlauchstück (13) erstreckt.

2. Trichterwaage nach Anspruch 1, dadurch gekennzeichnet, daß die zur Abstützung der Gehäusedeckplatte (9) auf dem unteren Gehäuseteil (4) dienenden Abstandshalter (6) das elastische Schlauchstück (13) mindestens im Bereich eines Halbkreises an seinem Umfang freilassend angeordnet sind.

3. Trichterwaage nach Anspruch 1 oder 2, dadurch gekennzeichnet, daß das den Wiegebehälter (11) umgebende elastische Schlauchstück (13) aus antistatisch wirkendem Filtergewebe und/oder Klarsichtfolie gefertigt ist.

4. Trichterwaage nach einem der Ansprüche 1 bis 3, dadurch gekennzeichnet, daß das elastische Schlauchstück (13) die Form eines sich nach unten verjüngenden Kegelstumpfes aufweist.

5. Trichterwaage nach einem der Ansprüche 1 bis 4, dadurch gekennzeichnet, daß die Befestigung des elastischen Schlauchstückes (13) an der Gehäusedeckplatte (9) sowie am unteren Gehäuseteil (4) mit Hilfe von leicht lösbaren Schnellverschlüssen erfolgt.

## Claims

1. Hopper weighing machine, for the regulation of mass throughput and metered weight during the extrusion of synthetic materials, consisting of a weighing container provided with an emptying flap (12), a housing, which is constructed in two parts, receives the weighing container (11) with the weighing rod (10) in the upper part and is closed in funnel shape in the lower part (4), a material feed nipple (8) placed on a housing cover plate (9) as well as an outlet shaft (2), which is connected with the lower housing part (4) and in which a level switch (3) is mounted, which calls up the respective next charge to be weighed, characterised thereby, that the housing cover plate (9), which carries the weighing container (11) with the weighing rod (10), is supported by way of spacer members (6) and oscillation dampers (7) on the lower funnel-shaped housing part (4) and that an elastic hose piece (13), which surrounds the weighing container (11) and is sealingly fastened at both ends, extends between the housing cover plate (9) and the lower housing part (4).

2. Hopper weighing machine according to claim 1, characterised thereby, that the spacer members (6), which serve to support the housing cover plate (9) on the lower housing part (4), leave the elastic hose place (13) free at its circumference in at least the region of a semicircle.

3. Hopper weighing machine according to claim 1 or 2, characterised thereby, that the elastic hose piece (13) surrounding the weighing container (11) is produced of a filter fabric acting antistatically and/or clear film.

4. Hopper weighing machine according to one of the claims 1 to 3, characterised thereby, that the elastic hose piece (13) displays the shape of a downwardly narrowing conical frustum.

5. Hopper weighing machine according to claims 1 to 4, characterised thereby, that the fastening of the elastic hose piece (13) at the housing cover plate (9) as well as at the lower housing part (4) takes place with the aid of easily openable snap closures.

## Revendications

1. Trémie peseuse pour régulation de débit de matière et du poids au mètre courant au cours l'extrusion de matières plastiques, constituée d'un caisson de pesée équipé d'un clapet de vidange (12), d'un châssis, fermé, en deux parties, en forme d'entonnoir dans sa partie inférieure (4) et recevant à sa partie supérieure le caisson de pesée (11) avec le fléau de pesage (10), d'un manchon d'alimentation matière (8) placé sur la plaque formant couvercle (9) du caisson ainsi que d'une gaine d'évacuation (2), reliée à la partie inférieure (4) du caisson, gaine dans laquelle est placée un contrôleur de niveau (3) appelant la prochaine charge à peser, caractérisée en ce que la plaque formant couvercle (9) du caisson portant le caisson de pesée (11) avec le fléau de pesage (10) s'appuie, par l'intermédiaire d'entretoises (6) et d'amortisseurs de vibrations (7), sur la partie inférieure (4) du caisson en forme d'entonnoir, et en ce qu'un manchon flexible élastique (13), entourant le caisson de pesée (11) et fixé d'une façon étanche à ses deux extrémités, s'étend entre la plaque formant couvercle (9) et la partie inférieure (4) du caisson.

2. Trémie peseuse suivant la revendication 1, caractérisée en ce que les entretoises (6) servant à appuyer la plaque formant couvercle (9) du caisson sur la partie inférieure (4) du caisson, sont disposées de façon à laisser libre le manchon flexible élastique (13) au moins dans le secteur d'un demi cercle, à sa périphérie.

3. Trémie peseuse suivant les revendications 1 et 2, caractérisée en ce que le manchon flexible élastique (13) entourant le caisson de pesée (11) est réalisé en tissu filtrant se comportant d'une façon antistatique et/ou en feuille transparente.

4. Trémie peseuse suivant l'une quelconque des revendications 1 à 3, caractérisée en ce que le manchon flexible élastique (13) présente la forme d'un tronc de cône s'amincissant vers le bas.

5. Trémie peseuse suivant l'une quelconque des revendications 1 à 4, caractérisée en ce que la fixation du manchon flexible élastique (13) est réalisée à l'aide d'attaches rapides se libérant facilement, sur la plaque formant couvercle (9) du caisson de même que sur la partie inférieure (4) du caisson.

EP 0 246 289 B1

Fig. 1

Fig. 2